# EUROPEAN PATENT SPECIFICATION

(11) **EP 2 516 888 B1**
(45) Date of publication and mention of the grant of the patent: **10.10.2018**
(21) Application number: 09799283.8
(22) Date of filing: 23.12.2009
(51) Int. Cl.: F16G 5/16

(54) **DRIVE BELT AND TRANSVERSE ELEMENT FOR A DRIVE BELT**
ANTRIEBSRIEMEN UND QUERELEMENT FÜR EINEN ANTRIEBSRIEMEN
COURROIE DE TRANSMISSION ET ÉLÉMENT TRANSVERSAL POUR UNE COURROIE DE TRANSMISSION

(43) Date of publication of application: 31.10.2012
(73) Proprietor: Robert Bosch GmbH, 70442 Stuttgart (DE)
(72) Inventor: FAES, Paulus, Adrianus, Josephus, Maria, NL-5045 ZH Tilburg (NL); VAN DER SLUIS, Francis, Maria, Antonius, NL-5271 HP Sint-Michielsgestel (NL); VAN DER VELDE, Arie, Gerrit, Issak, NL-5014 LW Tilburg (NL); PRINSEN, Lucas, Hendricus, Robertus, Maria, NL-5062 LV Oisterwijk (NL)
(74) Representative: Plevier, Gabriel Anton Johan Maria
(86) International application number: PCT/EP2009/009242
(87) International publication number: WO 2011/076233

(56) References cited:
- EP-A1- 0 014 014
- DE-A1- 10 357 849
- GB-A- 2 013 116
- JP-A- 3 089 050
- JP-U- 5 019 704
- JP-U- 5 030 590
- JP-U- 5 047 586

## Description

The invention relates to a drive belt for use with a continuously variable transmission having two variable pulleys, each forming a V-groove. The drive belt is provided with a carrier consisting of two adjacent band sets, each band set comprising at least one, but usually a number of concentrically nested, relatively thin and flat endless metal bands and with a number of metal transverse elements arranged on and in sliding relationship with the band sets. Each transverse element is provided with two cut-outs located opposite one another for accommodating the band sets, in such a manner that a first part of the transverse element extends below the band sets, a second part of the transverse element is situated between the band sets and a third part of the transverse element extends above the band sets. A drive belt of this type is known from EP-A-0014013.

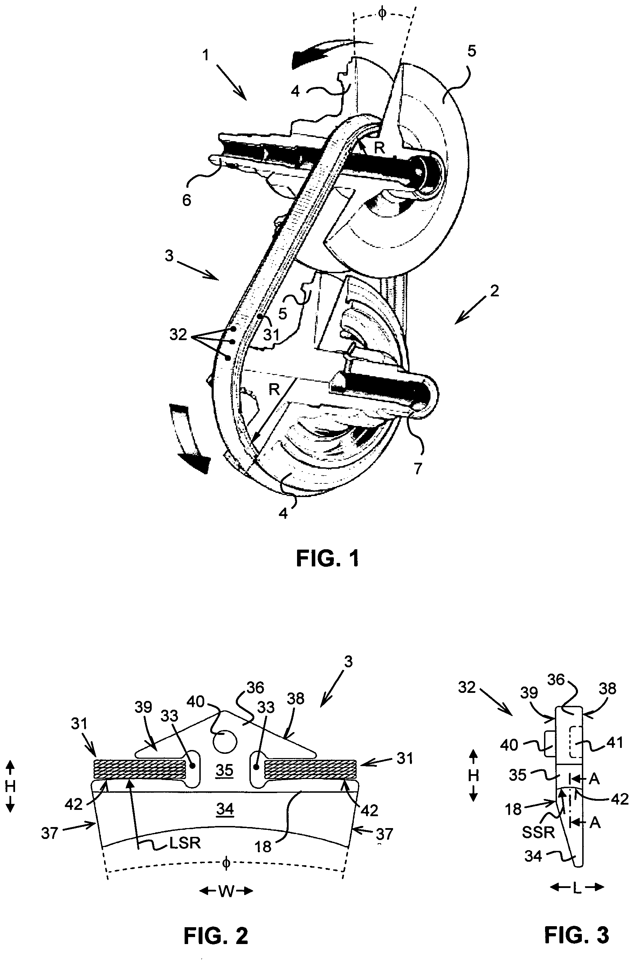

When describing the directions with respect to the transverse element, it is always assumed that the transverse element is in an upright position, such as is illustrated in figure 2 in a front view thereof. In this figure, the longitudinal or circumference direction of the drive belt is at right angles to the plane of the figure. The transverse or width direction is from left to right and the radial or height direction is from top to bottom in the plane of figure 2.

Specifically at the location of the cut-outs, the surface of the transverse elements has to meet certain requirements in order to ensure a good operation of the drive belt. For example, during operation of the drive belt in the transmission, the transverse elements are pushed radially outwards against the band sets by the transmission pulleys. As a result, the (radial inside of the) band set is contacted by a radially outwardly facing surface part of the said first part of the transverse element that forms the bottom of the respective cut-out, which surface part is referred to as the saddle surface. The finishing and shape of the saddle surface have a significant impact on the performance and/or durability of the band set and, hence, on the drive belt as a whole.

It is known, for example from GB-A-2013116, to design the saddle surface as a smooth, doubly curved surface, that is to say both width-wise and in the said longitudinal direction. It being understood that the width-wise curvature of the saddle surface is defined in a cross-sectional plane of the transverse element including the width and height directions, i.e. in a cross-section of the transverse element oriented in the longitudinal direction, and that the longitudinal curvature is defined in a cross-sectional plane of the transverse element including the height and longitudinal directions, i.e. in a cross-section of the transverse element oriented in the width direction. Although not perfectly smooth, the known saddle surface is provided with surface roughness of about 0.55 µm Ra roughness value at most, typically around 0.4 µm Ra.

The known width-wise curvature of the saddle surface describes, or at least may be approximated by, a circular arc with a radius of curvature that is referred to as the long saddle radius. The long saddle radius is set to an appropriate value that a/o is determined by an amount of transverse curvature or crowning of the band sets. Typically, the long saddle radius will have in a value in the range from 150 to 350 mm. As a result of this measure, a desired tracking or self-centering of the band sets relative to the respective saddle surfaces is realised.

Although the known curved saddle surface was previously conceived to represent the optimum shape for the saddle surface, according to the invention such shape can still be improved upon. More in particular, a disadvantage was found to be associated with the known shapes of the saddle surface (whether flat, longitudinally curved and/or curved width-wise), namely that during operation a significant amount of friction can occur in the sliding contact between the transverse elements and band sets, which causes a loss of efficiency and/or a build up of heat in that sliding contact. This build up of heat can in turn cause excessive wear, and/or a decrease in fatigue strength of the transverse element and/or the band set and as such can limit the power transmitting capacity of the drive belt.

The present invention aims to provide a viable alternative to the known, width-wise contour of the saddle surface of the transverse elements that provides an improvement in terms of the efficiency of the drive belt.

According to the invention the above aim is realized with the transverse element according to the claim 1 hereinafter. The saddle surface of the transverse element according to the invention is provided with grooves located between higher lying parts of the saddle surface. The said higher lying parts being intended to arrive in contact with the band set, whereas -at least a bottom surface of- the said groove is not. A long axis of the grooves is oriented at least predominantly in the longitudinal direction of the drive belt, i.e. in the direction of movement thereof.

In these grooves, a cooling and/or lubricant agent, such as automatic transmission fluid (ATF) or oil, as typically applied in the present type transmission, will accumulate during operation, which is considered to have a positive effect on the sliding contact between the transverse element and the band set. In particular, the lubrication of the said sliding contact is believed to be enhanced thereby, for instance in terms of a thicker oil film there between, resulting in a reduced wear rate and/or decreased energy losses through friction.

It is noted that a surface profile of grooves and ridges that is typically provided to at least the radial inside of the band sets, i.e. to the radially inwardly oriented surface of the radially innermost band thereof, as is for example described in US-4,332,575 can potentially be favourably omitted by the provision of several grooves in the saddle surface in accordance with the present invention, in which case the grooves are preferably mutually spaced at a distance of 50 to 250 µm.

It is further noted that all of the three prior Japanese utility model applications No. H05-19704, H05-30590 and H05-47586 disclose a transverse element whereof the saddle surface is provided with grooves running in the longitudinal direction of the drive belt. The scale of the known grooves is not mentioned in these documents. Based on the overall scale of the relevant drawing figures the spacing and/or size of the grooves, however, appears to be orders of magnitude larger than those of the present invention. Furthermore, specifically in relation to H05-47586, it is noted that the grooves are intended to interlock with ridges of the band set, i.e. these latter known grooves do thus not appear to be available for the accumulation of oil.

In a more detailed embodiment, the said higher lying parts of the saddle surface may be provided with a convexly curved outer contour, preferably such that together these higher lying parts effectively form the known width-wise curvature of the saddle surface, albeit interrupted by the said groove or grooves.

In an alternative embodiment of the invention, also the upper or radially inwardly facing boundary surface of the cut-out, which is defined by the said third part of the transverse element and which also may arrive into contact with (in this case the radial outside of) the band set, is provided with at least one groove in a manner corresponding to and to the same effect as the groove or grooves provided in the saddle surface as described herein in detail.

In order to illustrate the invention, an exemplary embodiment of a drive belt will be described with reference to the drawing, in which:
Fig. 1 diagrammatically shows a continuously variable transmission with a drive belt running over two pulleys;
Fig. 2 shows a cross section of the drive belt viewed in the longitudinal direction thereof;
Fig. 3 shows a width-wise oriented view of a transverse element of the drive belt;
Fig. 4 schematically shows a cross-section of the transverse element according to a first embodiment of the invention; and
Fig. 5 schematically shows a second embodiment of the transverse element according to invention.

The diagrammatic illustration of Figure 1 shows a drive belt 3 which runs over two pulleys 1, 2. In the illustrated position, the top pulley 1 rotates more quickly than the bottom pulley 2. By changing the distance between the two parts, in this case conical discs 4, 5 from which each pulley 1, 2 is composed, the so-called running radius R of the drive belt 3 on the respective pulleys 1, 2 can be changed, as a result of which the speed difference between the two pulleys 1,2 can be varied as desired. This is a known manner of varying a difference in rotational speed between two shafts.

In Figure 2, the drive belt 3 is shown in cross section. This figure shows a cross section of two band sets 31 and a front view of a transverse element 32, of which the drive belt 3 comprises a considerable number, arranged over the periphery of the band sets 31. Both the transverse elements 32 and the bands of the band sets 31 are made of metal. The transverse elements 32 are able to move freely in the longitudinal direction of the band sets 31, so that when a force is transmitted between the pulleys 1, 2, this force is transmitted by the transverse elements 32 pressing against one another. The band sets 31 in this case guide the transverse elements 32.

In the exemplary embodiment illustrated here, a band set 31 consists of five bands, although in practice a band set 31 can comprise more bands, even up to twelve or more.

Each transverse element 32, which is also shown in side view in Figure 3, is provided with two cut-outs 33 located opposite one another, each for accommodating one of the two band sets 31, so that a first or base part 34 of the transverse element 32 extends below the band sets 31, a second or neck part 35 of the transverse element 32 is situated between the band sets 31 and a third or head part 36 of the transverse element 32 extends above the band sets 31. A respective cut-out 33 is delimited at the bottom by a so-called saddle surface 42 of the base part 34 that faces upwards, i.e. in the general direction of the head part 36.

It is noted that, in the known design of the transverse element 32, the saddle surface 42 connects to an outer surface of the neck part 35 via a concavely curved transition surface thus providing a recessed area 43 between the saddle surface 42 and the neck part 35.

The saddle surface 42 is at least provided with a width-wise oriented convex curvature and preferably also with a curvature in the said longitudinal direction. A radius of the width-wise curvature of the saddle surface 42 is referred to as the long saddle radius LSR and a radius of the longitudinal curvature of the saddle surface 42 is referred to as the short saddle radius SSR. In the figures these curvatures of the saddle surface 42 are exaggerated.

The lateral or pulley contact surfaces 37 of said base part 34 of the transverse element 32 are oriented at an angle with respect to one another, which corresponds at least substantially to a V-angle φ defined between the conical discs 4,5 of the pulleys 1,2 (see Fig. 1).

A rear side 38 of the transverse element 32 is substantially flat, while a so-called tilting line 18 is provided on a front side 39 of the transverse element 32. Above the tilting line 18, the transverse element 32 in side view has an essentially constant thickness and below the tilting line 18 said base part 34 tapers towards the bottom side of the transverse element 32. The tilting line 18 is typically provided in the form of a slightly rounded section of the front side 39 of the transverse element 32. In the drive belt 3, the front side 39 of the transverse element 32 comes into contact with the rear side 38 of an adjacent transverse element 32 at the location of the tilting line 18, both in the straight sections of the drive belt 3 between the pulleys 1, 2 and in the curved sections thereof on the pulleys 1, 2.

The transverse element 32 is also provided with a protuberance 40 on the front side 39 and a recess 41 on the rear side 38, the protuberance 40 and the recess 41 of two transverse elements 32 abutting in the drive belt 3 mating, as a result of which a displacement with respect to one another in a direction oriented at right angles to the longitudinal direction of the drive belt 3 is limited to a tolerance of the protuberance 40 in the recess 41 in this direction.

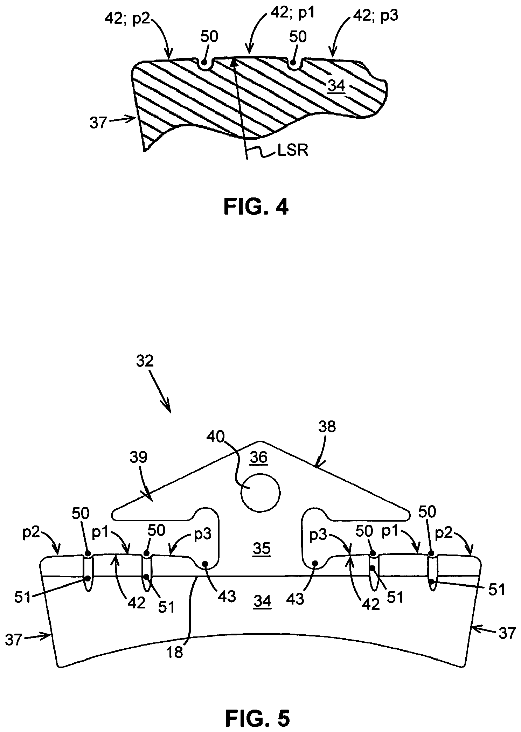

In figures 4 a first embodiments of the transverse element 32 according to the invention is represented by a cross-section of only the base part 34 thereof in the cross-sectional plane A-A indicated in figure 3, which plane includes the height direction H (see figs.2&3) and the width direction W (see fig.2) and which plane is thus oriented in the longitudinal direction W of the belt 3 (see fig.3).

In this first embodiment of the invention the saddle surface 42 is provided with two grooves 50 that are oriented in the longitudinal direction of the drive belt 3, i.e. over the thickness dimension of the transverse element 32. In this embodiment example, the grooves 50 are located at approximately 1/3 and 2/3 of the total width dimension of the saddle surface 42. The grooves 50 are designed such that at least a bottom surface part thereof does not contact the band set 31.

During operation of the drive belt 3 with transverse elements 32 designed in accordance with the figure 4 embodiment, lubricant is accommodated in the grooves 50 for the lubrication of the sliding contact between the transverse element 32 and the band set 31 to reduce a wear rate thereof and/or to decrease friction there between.

In this first embodiment of the invention, the outer contour of higher lying parts p1, p2 and p3 of the saddle surface 42 in between and on the side of the grooves 50, which higher lying parts p1, p2, p3 do arrive in direct physical contact with the band set 31, are mutually shaped according to the known convexly curved contour, i.e. according to the long saddle radius LSR, which known, overall contour is now interrupted by the grooves 50. However, within the context and scope of the invention, various shapes, sizes and numbers, e.g. up to several tens, of the grooves 50 and of outer contours of the higher lying parts p1, p2, p3 are possible. For example, the higher lying parts p1, p2, p3 may be individually provided with a symmetrically shaped convex curvature, or may even be shaped flat and level. Also, a groove 50 may be dimensioned to be broader than a higher lying part p1, p2, p3. According to the invention, however, the groove or grooves 50 are 25 to 250 µm deep (when measured perpendicular and relative to an imaginary contour of the saddle surface 42 uninterrupted by grooves 50), more preferably around 50 to 100 µm, and make up 5 to 50%, more preferably around 25%, of an overall (imaginary, uninterrupted) surface area of the saddle surface 42.

In a second embodiment of the invention that is illustrated in figure 5, a groove 50 in the saddle surface 42 extends into the front side 39 of the transverse element 32 at least down to and intersecting the tilting line 18 that is thus interrupted by such groove extension 51. By this feature, oil is allowed to flow from the radial inside of the drive belt 3 towards the saddle surface 42 or, more specifically, towards the groove 50 that is associated with such groove extension 51. Such flow being supported by the rotation of the drive belt 3 on and around the transmission pulleys 1, 2 during operation; as a result whereof any oil present on the (radial) inside of the drive belt 3 is forced radially outward under the influence of centripetal forces. The said groove extension 51 provide a flow path for the oil from the tilting line 18 to the sliding contact between the transverse element 32 and the band set 31.

It is noted that although these latter grooves 51 in the front side 39 of the transverse element 32 are referred to and described as extensions of the grooves 50 in the saddle surface 42, they can be applied independently there from, to the same effect and advantage of improving the lubrication of the said sliding contact. Moreover, these latter grooves 51 can alternatively or additionally be provided on the rear side 38 of the transverse element 32.

## Claims

1. Transverse element (32) for a drive belt (3) provided with a band set (31) and with a number of such transverse elements (32), which transverse element (32) is provided with a cut-out (33) for accommodating the band set (31), with a base part (34) in height direction extending below the cut-out (33), with a head part (36) in height direction extending above the cut-out (33) and with a neck part (35) connecting the base part (34) to the head part (36), the cut-out (33) being delimited in part by a saddle surface (42) of the base part (34), which saddle surface (42) is provided with grooves (50) that are located between higher lying parts (p1, p2, p3) of the saddle surface (42), which grooves (50), more in particular the long axes thereof, are predominantly oriented in the longitudinal direction of the drive belt (3), perpendicular to both the said height direction and a transverse or width direction thereof, **characterised in that**, the said grooves (50) are between 25 µm and 250 µm deep, are mutually spaced at a distance of between 50 µm and 250 µm and make up between 5% and 50%, preferably around 25%, of an overall surface area of the saddle surface (42).

2. The transverse element (32) according to claim 1, **characterised in that**, the grooves (50) are between 50 µm and 100 µm deep.

3. The transverse element (32) according to claim 1 or 2, **characterised in that**, by the provision of the groove (51) the surface roughness of the saddle surface (42) exceeds 0.55 µm Ra.

4. Drive belt (3) provided with a band set and a transverse element (32) according to a preceding claim, **characterised in that**, the radially inwardly oriented surface of the radially innermost band of the band set (31) is not provided with a surface profile of grooves and ridges.

## Patentansprüche

1. Querelement (32) für einen Antriebsriemen (3), der mit einem Bandsatz (31) und mit einer Anzahl derartiger Querelemente (32) versehen ist, wobei das Querelement (32) mit einer Aussparung (33) zur Aufnahme des Bandsatzes (31) versehen ist, wobei sich ein Basisteil (34) in der Höhenrichtung unterhalb der Aussparung (33) erstreckt, wobei sich ein Kopfteil (36) in der Höhenrichtung oberhalb der Aussparung (33) erstreckt und wobei ein Halsteil (35) den Basisteil (34) mit dem Kopfteil (36) verbindet, wobei die Aussparung (33) zum Teil durch eine Sattelfläche (42) des Basisteils (34) begrenzt wird, wobei die Sattelfläche (42) mit Nuten (50) versehen ist, die zwischen höher liegenden Teilen (p1, p2, p3) der Sattelfläche (42) positioniert sind, wobei die Nuten (50), insbesondere ihre Längsachsen, überwiegend in der Längsrichtung des Antriebsriemens (3) senkrecht zu sowohl der Höhenrichtung als auch einer Quer- oder Breitenrichtung davon ausgerichtet sind, **dadurch gekennzeichnet, dass** die Nuten (50) zwischen 25 µm und 250 µm tief sind, in einem Abstand von 50 µm bis 250 µm voneinander beabstandet sind und zwischen 5 % und 50 %, vorzugsweise ungefähr 25 %, einer Gesamtfläche der Sattelfläche (42) ausmachen.

2. Querelement (32) nach Anspruch 1, **dadurch gekennzeichnet, dass** die Nuten (50) zwischen 50 µm und 100 µm tief sind.

3. Querelement (32) nach Anspruch 1 oder 2, **dadurch gekennzeichnet, dass** durch das Vorsehen der Nut (51) die Oberflächenrauigkeit der Sattelfläche (42) 0,55 µm Ra überschreitet.

4. Antriebsriemen (3), der mit einem Brandsatz und einem Querelement (32) nach einem vorhergehenden Anspruch versehen ist, **dadurch gekennzeichnet, dass** die radial nach innen ausgerichtete Fläche des radial am weitesten innen liegenden Bands des Bandsatzes (31) nicht mit einem Oberflächenprofil aus Nuten und Stegen versehen ist.

## Revendications

1. Élément transversal (32) pour une courroie de transmission (3) pourvue d'un ensemble de bandes (31) et d'un certain nombre de tels éléments transversaux (32), ledit élément transversal (32) étant pourvu d'une échancrure (33) destinée à recevoir l'ensemble de bandes (31), d'une partie base (34) s'étendant, dans la direction de hauteur, sous l'échancrure (33), d'une partie tête (36) s'étendant, dans la direction de hauteur, au-dessus de l'échancrure (33) et d'une partie col (35) reliant la partie base (34) à la partie tête (36), l'échancrure (33) étant délimitée en partie par une surface de portée (42) de la partie base (34), ladite surface de portée (42) étant pourvue de rainures (50) qui sont situées entre des parties surélevées (p1, p2, p3) de la surface de portée (42), lesdites rainures (50), plus particulièrement les axes longs de celles-ci, étant orientées principalement dans la direction longitudinale de la courroie de transmission (3), perpendiculairement à la fois à ladite direction de hauteur et à une direction transversale ou de largeur de celle-ci, **caractérisé en ce que** lesdites rainures (50) présentent une profondeur comprise entre 25 µm et 250 µm, sont espacées mutuellement par une distance comprise entre 50 µm et 250 µm et constituent entre 5 % et 50 %, de préférence environ 25 %, d'une superficie totale de la surface de portée (42).

2. Élément transversal (32) selon la revendication 1, **caractérisé en ce que** les rainures (50) présentent une profondeur comprise entre 50 µm et 100 µm.

3. Élément transversal (32) selon la revendication 1 ou 2, **caractérisé en ce que**, du fait de la présence de la rainure (51), la rugosité de surface de la surface de portée (42) est supérieure à 0,55 µm Ra.

4. Courroie de transmission (3) pourvue d'un ensemble de bandes et d'un élément transversal (32) selon une revendication précédente, **caractérisée en ce que** la surface orientée radialement vers l'intérieur de la bande en position radialement intérieure extrême de l'ensemble de bandes (31) n'est pas pourvue d'un profil de surface composé de rainures et de nervures.
